# FASCICULE DE BREVET EUROPEEN

(11) **EP 3 555 710 B1**
(45) Date de publication et mention de la délivrance du brevet: **02.03.2022**
(21) Numéro de dépôt: 17783875.2
(22) Date de dépôt: 17.10.2017
(51) Int. Cl.: G04G 21/04, A44C 5/00

(54) **PROCEDE DE REALISATION D'UN BRACELET INTELLIGENT MUNI D'UN INSERT A COMPOSANTS ELECTRONIQUES**
HERSTELLUNGSVERFAHREN EINES INTELLIGENTEN ARMBANDS, DAS MIT EINEM EINSATZ MIT ELEKTRONISCHEN KOMPONENTEN AUSGESTATTET IST
METHOD FOR PRODUCING A SMART BRACELET PROVIDED WITH AN INSERT WHICH HAS ELECTRONIC COMPONENTS

(30) Priorité: 15.12.2016 EP 16204485
(43) Date de publication de la demande: 23.10.2019
(73) Titulaire: The Swatch Group Research and Development Ltd, 2074 Marin (CH)
(72) Inventeur: FRANÇOIS, Nicolas, 2000 Neuchâtel (CH); RANNOUX, Claire, 1202 Genève (CH); NICOLAS, Cédric, 2000 Neuchâtel (CH)
(74) Mandataire: ICB SA
(86) Numéro de dépôt international: PCT/EP2017/076396
(87) Numéro de publication internationale: WO 2018/108354

(56) Documents cités:
- WO-A1-2016/125034
- M. HÜKSE ET AL: "Laser supported activation and additive metallization of thermoplastic for 3D-MIDS", PROCEEDINGS OF THE 3RD LANE 2001, AUGUST 28-31, 2001, ERLANGEN, GERMANY, 1 janvier 2001 (2001-01-01), XP055013109, cité dans la demande

## Description

### Domaine de l'invention

L'invention se rapporte à un procédé de réalisation d'un bracelet intelligent muni d'un insert à composants électroniques.

L'invention se rapporte également au bracelet obtenu selon le procédé de réalisation du bracelet.

### Arrière-plan de l'invention

Traditionnellement, les bracelets de montres sont réalisés en cuir, en matière synthétique, en tissu, en matière caoutchouteuse, ou en métal. Les bracelets comprennent également un insert disposé dans une doublure ou un fourreau ou entre une bande supérieure et une bande inférieure réunies l'une à l'autre par la suite. Cet insert a une fonction principalement mécanique et flexible.

Dans le cas d'un bracelet en cuir, l'insert est constitué de renfort indéchirable et de rembourrage en cuir et en non tissé pour donner le relief au bracelet. Une doublure en cuir est encore prévue, ainsi qu'un dessus en cuir ou synthétique. Le dessus est rembordé sous la doublure, ce qui permet d'obtenir un bracelet très résistant.

Selon une variante d'exécution, le bracelet comporte un dessus, qui n'est rembordé que sur les côtés du bracelet pour être du type semi-rembordé. La réalisation du bracelet semi-rembordé ou rembordé-machine se fait à l'aide d'un moule et d'une presse à plateau

Il peut encore être imaginé un bracelet en cuir du type coupé franc, dans lequel toutes les couches sont collées les unes aux autres. Une préforme peut ensuite être découpée à la forme de chaque brin du bracelet par une presse. Les bords du bracelet sont par la suite protégés par une laque de tranche. Cependant l'insert de ce type de bracelet n'est prévu que comme renfort indéchirable et flexible.

Actuellement, des composants électroniques peuvent être intégrés dans le bracelet, mais on constate que leur intégration est difficile pour garantir une protection suffisante aux différentes conditions de l'environnement ou à l'humidité ou à la sueur lors du porté de la montre. Plusieurs montres ont déjà été proposées avec un bracelet muni de composants électroniques pour une connexion sans fil avec un autre dispositif, tel qu'un téléphone portable ou un autre instrument. Cependant, la protection des composants électroniques reste insuffisante, ce qui constitue un inconvénient. De plus, l'épaisseur générale du bracelet est souvent trop importante et les composants électroniques restent visibles, ce qui nuit également à l'esthétisme du bracelet.

On peut citer à ce titre la demande de brevet FR 2 641 092 A2, qui décrit un bracelet d'une montre. Le bracelet comprend une partie de connexion électrique à la boîte de montre, ainsi qu'un ensemble de composants électroniques, qui sont au moins un circuit intégré et une source d'énergie. Cependant, il n'est pas défini une protection suffisante des composants électroniques aux conditions environnementales, ce qui constitue un inconvénient. Les composants électroniques restent aussi visibles dans le bracelet, ce qui nuit à l'aspect esthétique du bracelet.

Dans la demande de brevet WO 2016/125034 A1, il est décrit un bracelet traditionnel, dans lequel sont intégrés plusieurs composants électroniques le long d'un brin ou des deux brins du bracelet. Ces composants électroniques ne sont pas protégés contre les conditions environnementales et contre les chocs, ce qui est un inconvénient.

### Résumé de l'invention

L'objet de la présente invention est de pallier les problèmes susmentionnés de l'état de la technique en proposant un procédé de réalisation d'un bracelet intelligent muni d'un insert à composants électroniques bien protégés des conditions environnementales et de faible épaisseur.

A cet effet, l'invention a pour objet un procédé de réalisation d'un bracelet intelligent, qui comprend les caractéristiques mentionnées dans la revendication indépendante 1.

Des étapes particulières du procédé de réalisation du bracelet intelligent sont définies dans les revendications dépendantes 2 à 13.

Un avantage du procédé de réalisation d'un bracelet intelligent réside dans le fait que l'insert à composants électroniques est obtenu, à la forme tridimensionnelle finale du bracelet, avec une protection des composants électroniques à la sueur au porté de la montre ou du bracelet, à l'humidité en général, aux différents chocs mécaniques et aux différentes conditions environnementales. De plus, l'épaisseur générale de l'insert défini comme plastronique est suffisamment réduite de manière à pouvoir remplacer un insert de renfort traditionnel dans une doublure en cuir ou en matière synthétique d'un bracelet sans augmenter l'épaisseur traditionnelle d'un tel bracelet.

L'invention a également pour objet un bracelet réalisé selon le procédé de réalisation du bracelet, qui comprend les caractéristiques définies dans la revendication indépendante 14.

Des formes d'exécution particulières du bracelet sont définies dans les revendications dépendantes 15 et 16.

### Brève description des dessins

Les buts, avantages et caractéristiques du procédé de réalisation d'un bracelet intelligent muni d'un insert à composants électroniques apparaîtront mieux dans la description suivante par les dessins sur lesquels :
Les figures 1a à 1d représentent différentes étapes du procédé de réalisation d'un insert à composants électroniques d'un bracelet selon l'invention, et
la figure 2 représente un brin de bracelet muni d'un insert de type plastronique selon l'invention.

### Description détaillée de l'invention

Dans la description suivante, tous les composants électroniques montés dans le bracelet, qui sont bien connus d'un homme du métier dans ce domaine technique, ne sont décrits que de manière simplifiée. Les composants électroniques peuvent comprendre un microprocesseur, un oscillateur, des capteurs de mesure de paramètres physiques, un circuit de communication sans fil, une batterie flexible, un dispositif d'affichage par exemple du type OLED. L'insert à composants électroniques est défini comme un insert du type plastronique.

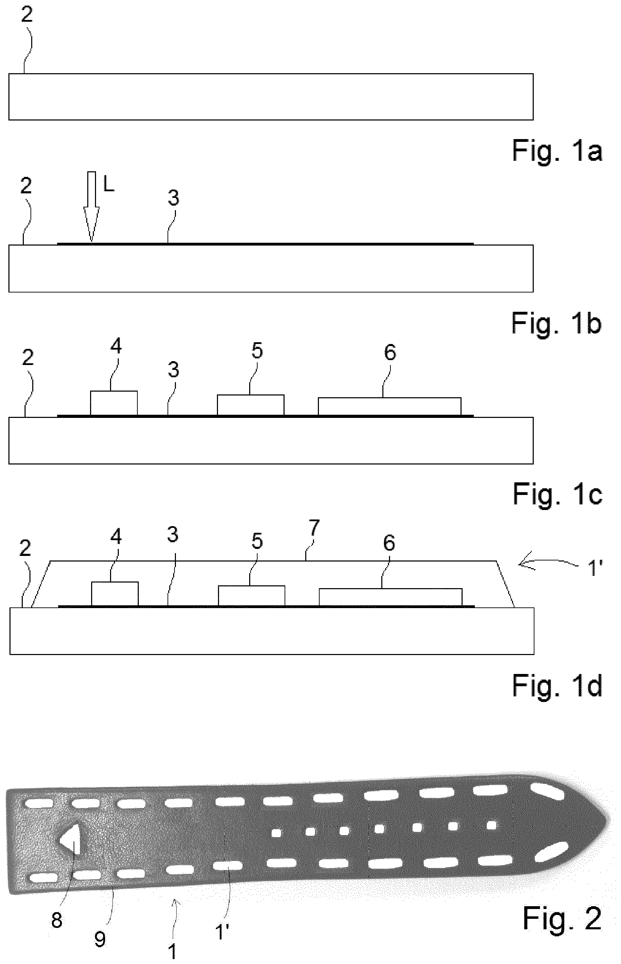

Les figures 1a à 1d représentent différentes étapes de la réalisation notamment d'un insert 1' du type plastronique avec le montage de plusieurs composants électroniques pour un bracelet, tel qu'un bracelet de montre, en vue de côté. L'insert peut être composé d'un support plastique souple. Ce support peut être de diverses couleurs, de dureté de l'ordre de 30 shore A à 90 shore A et une résistance à au moins 500 cycles de pliages positifs et négatifs à 180°. Il doit résister à une traction supérieure à 250 N. Il a une bonne résistance chimique aux colles et solvants à la sueur et à l'eau, aux produits cosmétiques. Il doit avoir encore une bonne compatibilité chimique avec les colles chloroprènes et polyuréthanes. La matière utilisée pour le plastique est transparente aux ondes électromagnétiques.

Pour l'obtention du bracelet intelligent muni d'un insert 1' à composants électroniques, il est tout d'abord important de fabriquer un support souple 2 sous forme de bande de faible épaisseur, vu en figure 1a. Le support souple 2 en forme de bande doit être en matière plastique souple. Ce support souple 2 est une partie de base d'un insert 1' à composants électroniques conçu pour pouvoir être placé dans un fourreau traditionnel ou entre une bande supérieure et une bande inférieure d'au moins un brin d'un bracelet final ou enrobé dans un élastomère vulcanisé du bracelet comme expliqué ci-après.

Dans un procédé avantageux de l'invention, ce support souple 2 constitue la base du circuit imprimé. Il est fabriqué en forme de bande dans une première étape du procédé au moyen d'une matière plastique ou thermoplastique, qui sera ensuite métallisée sélectivement par plasma (procédé plasmacoat 3D). Il peut être réalisé par extrusion d'une matière thermoplastique à travers une filière adaptée à la forme du bracelet ou d'au moins un des brins du bracelet. Il peut également être réalisé par moulage par injection. Le support souple peut être un thermoplastique de polyuréthane d'une dureté de 65 shore A à 90 shore A. Il peut également s'agir d'un autre élastomère thermoplastique répondant aux exigences souhaitées. Il peut aussi s'agir d'élastomères vulcanisés, tels qu'un caoutchouc nitrile ou un caoutchouc fluoré, d'une silicone ou d'un polyuréthane réticulé, qui seront mis en œuvre par extrusion.

Dans un autre procédé avantageux, le support souple 2 en matière moulée peut comprendre dans sa masse un additif spécial (additif LDS Laser Direct structuring) sous la forme d'un complexe métallique organique, afin de pouvoir réaliser une métallisation sélective via le processus MID (Molded Interconnected Devices) développé par LPKF avec une réaction physico-chimique induite notamment par un faisceau laser focalisé. Ce procédé est décrit dans la demande de brevet WO 2012/056416 A1.

Dans une seconde étape du procédé vu en figure 1b, il est réalisé des pistes conductrices 3 sur le support souple 2 ou dans le support souple 2 pour pouvoir placer par la suite et relier des composants électroniques de l'insert. Les pistes conductrices 3 peuvent être obtenues soit par un procédé équivalent au procédé plasmacoat 3D, soit par activation au moyen d'un faisceau laser focalisé L, tel que le procédé MID développé par LPKF, qui est programmé selon le schéma de connexion électrique des composants. Pour réaliser cette opération, on peut se référer à l'article intitulé "Laser supported activation and additive metallization of thermoplastics for 3D-MIDS" de M. Hüske, J. Kickelhain, J.Müller, G. Esser dans la revue Proceedings of the 3rd LANE 2001, d'août 28-31, 2001, Erlangen, Germany.

On notera que le procédé plasmacoat 3D apporte un avantage, car il évite le traitement galvanique de la pièce, afin de déposer le cuivre sur les pistes conductrices.

A la troisième étape montrée à la figure 1c, les différents composants électroniques 4, 5, 6 sont placés, fixés et électriquement connectés sur la surface du support souple 2, qui comporte les pistes conductrices 3. Pour la réalisation d'un insert du type plastronique, il peut être prévu un ou plusieurs capteurs 4, un microprocesseur 5 et une source d'énergie par exemple une batterie flexible 6. Les capteurs 4 peuvent être un capteur de pression, un capteur de température, un capteur de champ magnétique, un capteur d'accélération ou un autre type de capteur. Il peut encore être prévu un circuit de communication sans fil NFC, Bluetooth ou autre, un dispositif d'affichage par exemple OLED, un oscillateur, des commutateurs.

Finalement à la quatrième étape montrée à la figure 1d, les composants électroniques 4, 5, 6 sont enrobés dans une couche de protection 7, qui peut être transparente ou opaque. Cette couche de protection 7 permet de protéger tous les composants électroniques 4, 5, 6 des conditions environnementales, ainsi que de la sueur, lorsque le bracelet est porté au poignet, de l'humidité, de produits cosmétiques, de chocs mécaniques. La couche de protection 7 est réalisée avec une matière thermoplastique élastomère résistante à l'environnement et aux chocs mécaniques, telle qu'un polyuréthane surmoulé sur l'insert 1' du type plastronique. Elle peut aussi être réalisée avec une matière élastomère, telle qu'une silicone, un élastomère fluoré, un polyuréthane.

Il est encore à noter que la couche de protection 7 peut aussi avoir une fonction esthétique. A ce titre, elle contient des charges, telles que des pigments à effets spécifiques.

Dans un cas avantageux, il peut y avoir aussi une combinaison de pigments thermo-chromiques et de charges améliorant la conductivité thermique de la couche de protection 7. L'activité thermique de certains composants électroniques permet alors de modifier la couleur propre de la couche de protection 7.

Dans un autre cas avantageux, avant la couche de protection 7, une résine spéciale réticulable par radiations thermiques ou lumineuses peut être coulée sur certains composants électroniques sensibles. Cela permet de les protéger d'opérations de fabrications ultérieures agressives. Il peut s'agir de résine isolante thermique, ou électrique ou électromagnétique.

Dans une autre variante de réalisation, le support souple 2 peut être réalisé par co-extrusion de plusieurs matières et peut comprendre au moins deux bandes avec une bande à fonction technique et une autre bande à fonction décorative. Il peut être aussi prévu, par exemple, trois bandes disposées l'une au-dessus de l'autre ou côté à côte en vue de dessus. Dans ce dernier cas, une bande centrale est phosphorescente et deux bandes latérales sont en couleur fluorescente ou nacrées ou variochromiques. La tête de filière de l'instrument servant à réaliser le support souple, permet de réaliser un profil légèrement concave. Cela permet ensuite d'utiliser la bande centrale pour venir créer des décors qui viennent illuminer le bracelet de nuit et permet ainsi la lisibilité d'une information à visionner. Les bandes fluorescentes sur les côtés peuvent être utilisées pour créer des décors visibles de jour.

Il est encore à noter que le support souple 2 réalisé peut être composé de plusieurs matières injectées ou extrudées, et utilise des matériaux thermo-chromiques, qui changent de couleurs à différents seuils de température. Cela permet de créer un décor intelligent réagissant avec le fonctionnement de l'insert plastronique.

Des matériaux à mémoire de forme peuvent aussi être utilisés pour réaliser le support souple 2, comme le DESMOPAN 2795A SMP permettant de réaliser différents décors tridimensionnels à chaud par thermoformage. Une matière, qui contient des charges, peut aussi être utilisée pour améliorer le confort du porteur du bracelet (fragrances encapsulées, antibactérien, anti-sueur,...).

Une fois l'insert 1' du type plastronique terminé, cet insert peut être revêtu d'une couche en élastomère vulcanisé pour obtenir le bracelet. L'insert 1' peut aussi être placé dans un fourreau en cuir ou en matière synthétique ou tissée, ou entre une bande supérieure et une bande inférieure notamment en cuir, qui sont fixées l'une à l'autre pour obtenir le bracelet.

A la figure 2, il est représenté uniquement un brin d'un bracelet 1. L'insert 1' du type plastronique se trouve placé à l'intérieur d'une doublure en cuir 9. Comme précédemment indiqué, l'insert 1' une fois terminé peut être placé dans un fourreau en cuir 9 ou entre une bande supérieure et une bande inférieure en cuir. Des ouvertures peuvent être prévues dans la doublure en cuir 9 ou le dessus du bracelet, et permettent de faire apparaître soit le support souple ou la couche de protection de l'insert 1' du type plastronique. On propose par exemple une ouverture centrale 8 du bracelet 1 à proximité de sa fixation à une boîte de montre, pour obtenir un décor phosphorescent.

Dans le cas d'un support souple de l'insert 1' composé de trois bandes côte à côte, la bande centrale est phosphorescente et les deux bandes latérales sont fluorescentes pour rendre visible une information à visionner par exemple par les ouvertures en bordure du bracelet 1.

A partir de la description qui vient d'être faite, plusieurs variantes du procédé de réalisation d'un bracelet muni d'un insert du type plastronique, et le bracelet obtenu peuvent être conçues par l'homme du métier sans sortir du cadre de l'invention définie par les revendications. Les pistes conductrices sur le support souple de l'insert peuvent être réalisées par structuration d'une couche métallique déposée sur une surface du support souple ou par un autre type de couche conductrice structurable. Le bracelet réalisé peut être sous forme de boucle pour être porté au poignet. Il peut aussi être prévu de placer l'insert plastronique dans un bracelet à maillons métalliques et avoir une connexion électrique avec des composants électroniques disposés à l'intérieur d'une boîte de montre.

## Revendications

1. Procédé de réalisation d'un bracelet (1) muni d'un insert (1') à composants électroniques, le procédé comprenant les étapes consistant à :
- fabriquer un support souple (2) de base d'un insert (1') sous forme de bande, ledit support souple (2) étant en matière plastique ou en matière thermoplastique obtenu par moulage dans un moule adapté à la forme du bracelet (1),
- réaliser des pistes conductrices (3) sur le support souple (2) ou dans le support souple (2),
- disposer sur le support souple (2) différents composants électroniques (4, 5, 6) reliés aux pistes conductrices (3), le procédé étant **caractérisé par**:
- enrober les composants électroniques (4, 5, 6) disposés sur le support souple (2) dans une couche de protection (7) transparente ou opaque pour finaliser l'insert (1') du bracelet (1),
et en ce que pour la fabrication du support souple (2), il est prévu au moins deux bandes disposées l'une au-dessus de l'autre ou côté à côte, une bande apportant une fonction technique, qui est à conductivité thermique pour les composants électroniques ou à blindage électromagnétique, et une autre bande apportant une fonction décorative, qui est en couleur fluorescente ou nacrée ou variochromique ou phosphorescente.

2. Procédé de réalisation d'un bracelet selon la revendication 1, **caractérisé en ce que** le support souple (2) est obtenu par une injection ou une extrusion d'une matière thermoplastique ou de plusieurs matières plastiques ou thermoplastiques dans le moule adapté.

3. Procédé de réalisation d'un bracelet selon l'une des revendications précédentes, **caractérisé en ce que** le support souple (2) comprend dans sa masse un additif dans la forme d'un complexe organométallique.

4. Procédé de réalisation d'un bracelet selon la revendication 3, **caractérisé en ce que** les pistes conductrices (3) sont obtenues sur ou dans le support souple (2) ou dans la couche sur le support souple (2) par activation d'une réaction physico-chimique induite par un faisceau laser focalisé (L), qui est programmé selon le schéma de connexion électrique des composants.

5. Procédé de réalisation d'un bracelet selon la revendication 1, **caractérisé en ce que** l'insert (1') à composants électroniques est disposé et fixé dans un fourreau ou entre une bande supérieure et une bande inférieure du bracelet (1).

6. Procédé de réalisation d'un bracelet selon la revendication 5, **caractérisé en ce que** l'insert (1') à composants électroniques est disposé et fixé dans un fourreau ou entre une bande supérieure et une bande inférieure d'au moins un brin d'un bracelet (1) d'une montre-bracelet.

7. Procédé de réalisation d'un bracelet selon la revendication 5, **caractérisé en ce que** le fourreau ou les bandes inférieure et supérieure du bracelet (1) sont en cuir ou en matière synthétique ou tissée.

8. Procédé de réalisation d'un bracelet selon la revendication 1, **caractérisé en ce que** les pistes conductrices sont réalisés par un procédé de pulvérisation cathodique sélective plasma.

9. Procédé de réalisation d'un bracelet selon la revendication 1, **caractérisé en ce que** l'insert (1') à composants électroniques est enrobé dans un élastomère vulcanisé, tel qu'un caoutchouc nitrile ou un caoutchouc fluoré, ou dans une silicone ou dans un polyuréthane réticulé.

10. Procédé de réalisation d'un bracelet selon la revendication 1, **caractérisé en ce que** la couche de protection (7) est réalisée avec une matière thermoplastique élastomère résistante à l'environnement et aux chocs mécaniques.

11. Procédé de réalisation d'un bracelet selon la revendication 10, **caractérisé en ce que** la matière thermoplastique (7) est transparente aux ondes électromagnétiques.

12. Procédé de réalisation d'un bracelet selon la revendication 10, **caractérisé en ce que** la couche de protection (7) est en polyuréthane surmoulé.

13. Procédé de réalisation d'un bracelet selon la revendication 10, **caractérisé en ce que** la couche de protection (7) comprend une combinaison de pigments thermo-chromiques et de charges, pour permettre une modification de couleur de la couche de protection (7) en fonction de l'activité thermique des composants électroniques (4, 5, 6).

14. Bracelet (1) obtenu par le procédé de réalisation d'un bracelet selon l'une des revendications précédentes, **caractérisé en ce qu'**il comprend un insert (1') à composants électroniques, qui comprend un support souple (2), des pistes conductrices (3), des composants électroniques (4, 5, 6) reliés aux pistes conductrices (3) et une couche de protection (7) sur les composants électroniques (4, 5, 6) et le support souple (2), et **en ce que** l'insert (1') est disposé dans un fourreau ou entre une bande supérieure et une bande inférieure d'au moins un brin du bracelet (1), ou enrobé dans un élastomère vulcanisé ou dans une silicone ou dans un polyuréthane réticulé, et **en ce que** le support souple (2) de l'insert (1') comprend trois bandes disposées l'une au-dessus de l'autre ou côté à côte, **en ce qu'**une bande centrale est phosphorescente, et **en ce que** deux bandes latérales sont en couleur fluorescente.

15. Bracelet (1) selon la revendication 14, **caractérisé en ce que** l'insert (1') est enfermé dans une doublure en cuir ou en matière synthétique ou tissée, et **en ce qu'**une ouverture centrale (8) dans la doublure est prévue sur la bande centrale phosphorescente du support souple (2).

16. Bracelet (1) selon la revendication 14, **caractérisé en ce que** l'insert (1') est enfermé dans une doublure en cuir ou en matière synthétique ou tissée, et **en ce que** des ouvertures sont prévues dans une partie de bordure de la doublure sur les bandes fluorescentes du support souple (2) pour visionner une information.

## Patentansprüche

1. Verfahren zur Herstellung eines Armbands (1), das mit einem Einsatz (1') mit elektronischen Komponenten versehen ist, wobei das Verfahren die Schritte umfasst, die in Folgendem bestehen:
- Fertigen einer biegsamen Stütze (2) zur Auflage eines Einsatzes (1') in Form eines Bands, wobei die biegsame Stütze (2) aus Plastikmaterial oder aus thermoplastischem Material hergestellt ist, erhalten durch Gießen in eine Gießform, die an die Form des Armbands (1) angepasst ist,
- Herstellen von Leiterbahnen (3) auf der biegsamen Stütze (2) oder in der biegsamen Stütze (2),
- Anordnen verschiedener elektronischer Komponenten (4, 5, 6), die mit den Leiterbahnen (3) verbunden sind, auf der biegsamen Stütze (2), wobei das Verfahren **gekennzeichnet ist durch**:
- Überdecken der elektronischen Komponenten (4, 5, 6), die auf der biegsamen Stütze (2) angeordnet sind, in einer transparenten oder undurchsichtigen Schutzschicht (7), um den Einsatz (1') des Armbands (1) zum Abschluss zu bringen,
und dadurch, dass für die Fertigung der biegsamen Stütze (2) wenigstens zwei Bänder vorgesehen sind, die übereinander oder Seite an Seite angeordnet sind, wobei ein Band eine technische Funktion mit sich bringt, die auf Wärmeleitfähigkeit für die elektronischen Komponenten oder auf elektromagnetischer Abschirmung beruht, und ein anderes Band eine verzierende Funktion mit sich bringt, die eine fluoreszierende oder perlmutterne oder variochrome oder phosphoreszierende Farbe aufweist.

2. Verfahren zur Herstellung eines Armbands nach Anspruch 1, **dadurch gekennzeichnet, dass** die biegsame Stütze (2) durch eine Einspritzung oder eine Extrusion eines thermoplastischen Materials oder mehrerer Plastikmaterialien oder thermoplastischer Materialien in die angepasste Form erhalten wird.

3. Verfahren zur Herstellung eines Armbands nach einem der vorstehenden Ansprüche, **dadurch gekennzeichnet, dass** die biegsame Stütze (2) in ihrer Masse einen Zusatzstoff in der Form eines metallorganischen Komplexes umfasst.

4. Verfahren zur Herstellung eines Armbands nach Anspruch 3, **dadurch gekennzeichnet, dass** die Leiterbahnen (3) auf oder in der biegsamen Stütze (2) oder in der Schicht auf der biegsamen Stütze (2) erhalten werden durch Ingangsetzung einer physikalisch-chemischen Reaktion, die durch einen fokussierten Laserstrahl (L) hervorgerufen wird, der gemäß dem elektrischen Anschlussplan der Komponenten programmiert ist.

5. Verfahren zur Herstellung eines Armbands nach Anspruch 1, **dadurch gekennzeichnet, dass** der Einsatz (1') mit elektronischen Komponenten in einer Hülse oder zwischen einem oberen Band und einem unteren Band des Armbands (1) angeordnet und befestigt ist.

6. Verfahren zur Herstellung eines Armbands nach Anspruch 5, **dadurch gekennzeichnet, dass** der Einsatz (1') mit elektronischen Komponenten in einer Hülse oder zwischen einem oberen Band und einem unteren Band wenigstens eines Strangs eines Armbands (1) einer Armbanduhr angeordnet und befestigt ist.

7. Verfahren zur Herstellung eines Armbands nach Anspruch 5, **dadurch gekennzeichnet, dass** die Hülse oder die unteren und oberen Bänder des Armbands (1) aus Leder oder aus Kunststoff oder einem gewebten Material hergestellt sind.

8. Verfahren zur Herstellung eines Armbands nach Anspruch 1, **dadurch gekennzeichnet, dass** die Leiterbahnen durch ein Verfahren selektiven Plasmasputterns hergestellt werden.

9. Verfahren zur Herstellung eines Armbands nach Anspruch 1, **dadurch gekennzeichnet, dass** der Einsatz (1') mit elektronischen Komponenten überdeckt ist in einem vulkanisierten Elastomer, wie etwa ein Nitrilkautschuk oder ein Fluorkautschuk, oder in einem Silikon oder in einem vernetzten Polyurethan.

10. Verfahren zur Herstellung eines Armbands nach Anspruch 1, **dadurch gekennzeichnet, dass** die Schutzschicht (7) mit einem thermoplastischen Elastomermaterial hergestellt wird, das gegen die Umwelt und mechanische Stöße beständig ist.

11. Verfahren zur Herstellung eines Armbands nach Anspruch 10, **dadurch gekennzeichnet, dass** das thermoplastische Material (7) für elektromagnetische Wellen transparent ist.

12. Verfahren zur Herstellung eines Armbands nach Anspruch 10, **dadurch gekennzeichnet, dass** die Schutzschicht (7) aus einem überformten Polyurethan hergestellt ist.

13. Verfahren zur Herstellung eines Armbands nach Anspruch 10, **dadurch gekennzeichnet, dass** die Schutzschicht (7) eine Kombination von thermochromen Pigmenten und von Ladungen umfasst, um eine Farbänderung der Schutzschicht (7) in Abhängigkeit von der thermischen Aktivität der elektronischen Komponenten (4, 5, 6) zu ermöglichen.

14. Armband (1), das durch das Verfahren zur Herstellung eines Armbands nach einem der vorstehenden Ansprüche erhalten wird, **dadurch gekennzeichnet, dass** es einen Einsatz (1') mit elektronischen Komponenten umfasst, der eine biegsame Stütze (2), Leiterbahnen (3), elektronische Komponenten (4, 5, 6), die mit den Leiterbahnen (3) verbunden sind, und eine Schutzschicht (7) auf den elektronischen Komponenten (4, 5, 6) und der biegsamen Stütze (2) umfasst, und dadurch, dass der Einsatz (1') in einer Hülse oder zwischen einem oberen Band und einem unteren Band wenigstens eines Strangs des Armbands (1) angeordnet ist oder in einem vulkanisierten Elastomer oder in einem Silikon oder in einem vernetzten Polyurethan überdeckt ist, und dadurch, dass die biegsame Stütze (2) des Einsatzes (1') drei Bänder umfasst, die übereinander oder Seite an Seite angeordnet sind, dadurch, dass ein Mittelband phosphoreszierend ist, und dadurch, dass zwei Seitenbänder fluoreszierender Farbe sind.

15. Armband (1) nach Anspruch 14, **dadurch gekennzeichnet, dass** der Einsatz (1') in einem Futter aus Leder oder aus Kunststoff oder einem gewebten Material eingeschlossen ist, und dadurch, dass eine Mittelöffnung (8) in dem Futter auf dem phosphoreszierenden Mittelband der biegsamen Stütze (2) vorgesehen ist.

16. Armband (1) nach Anspruch 14, **dadurch gekennzeichnet, dass** der Einsatz (1') in einem Futter aus Leder oder aus Kunststoff oder einem gewebten Material eingeschlossen ist, und dadurch, dass Öffnungen in einem Teil der Umrandung des Futters auf den fluoreszierenden Bändern der biegsamen Stütze (2) vorgesehen sind, um eine Information anzusehen.

## Claims

1. Method for making a bracelet (1) provided with an electronic component insert (1'), the method including the steps consisting in:
- fabricating a basic flexible support (2) for an insert (1') in the form of a band, said flexible support (2) being made of plastic material or of thermoplastic material obtained by moulding in a mould adapted to the shape of the bracelet (1),
- making conductive paths (3) on the flexible support (2) or in the flexible support (2),
- disposing on the flexible support (2) various electronic components (4, 5, 6) connected to the conductive paths (3), the method being **characterized by** :
- coating the electronic components (4, 5, 6) disposed on the flexible support (2) with a transparent or opaque protective layer (7) to finish the insert (1') of the bracelet (1),
and in that for the fabrication of the flexible support (2), it is planned at least two bands disposed one on top of the other or side by side, one band having a technical function, which provides a thermal conductivity for the electronic components or electromagnetic shielding, and the other band having a decorative function, which is in a fluorescent colour or pearlescent or variochromic or phosphorescent.

2. Method for making a bracelet according to claim 1, **characterized in that** the flexible support (2) is obtained by injection moulding or extrusion of a thermoplastic material or of several plastic or thermoplastic materials in the appropriate mould.

3. Method for making a bracelet according to any of the preceding claims, **characterized in that** the flexible support (2) contains within it an additive in the form of an organic metal complex.

4. Method for making a bracelet according to claim 3, **characterized in that** the conductive paths (3) are obtained on or in the flexible support (2) or in the layer on the flexible support (2) by activation of a physicochemical reaction induced by a focused laser beam (L), which is programmed according to the electrical connection pattern of the components.

5. Method for making a bracelet according to claim 1, **characterized in that** the electronic component insert (1') is disposed and secured inside a sheath or between an upper band and a lower band of the bracelet (1).

6. Method for making a bracelet according to claim 5, **characterized in that** the electronic component insert (1') is disposed and secured inside a sheath or between an upper band and a lower band of at least one strand of a wristwatch bracelet (1).

7. Method for making a bracelet according to claim 5, **characterized in that** sheath or the upper and lower bands of the bracelet (1) are made of leather or of synthetic or woven material.

8. Method for making a bracelet according to claim 1, **characterized in that** the conductive paths are made by a selective plasma spraying process.

9. Method for making a bracelet according to claim 1, **characterized in that** the electronic component insert (1') is coated with a vulcanized elastomer, such as a nitrile rubber or a fluorinated rubber, or with a silicone or with a crosslinked polyurethane.

10. Method for making a bracelet according to claim 1, **characterized in that** the protective layer (7) is made with a thermoplastic elastomer resistant to the environment and to mechanical shocks.

11. Method for making a bracelet according to claim 10, **characterized in that** the thermoplastic material (7) is transparent to electromagnetic waves.

12. Method for making a bracelet according to claim 10, **characterized in that** the protective layer (7) is made of overmoulded polyurethane.

13. Method for making a bracelet according to claim 10, **characterized in that** the protective layer (7) includes a combination of thermochromic pigments and fillers, to allow the colour of the protective layer (7) to change according to the thermal activity of the electronic components (4, 5, 6).

14. Bracelet (1) obtained by the bracelet making method according to any of the preceding claims, **characterized in that** the bracelet includes an electronic component insert (1'), which includes a flexible support (2), conductive paths (3), electronic components (4, 5, 6) connected to the conductive paths (3) and a protective layer (7) on the electronic components (4, 5, 6) and the flexible support (2), and **in that** the insert (1') is disposed inside a sheath or between an upper band and a lower band of at least one strand of the bracelet (1), or coated with a vulcanized elastomer or with a silicone or with a crosslinked polyurethane, and **in that** the flexible support (2) of the insert (1') includes three bands disposed one on top of the other or side-by-side, **in that** a central band is phosphorescent, and **in that** two lateral bands are in a fluorescent colour.

15. Bracelet (1) according to claim 14, **characterized in that** the insert (1') is confined inside a lining made of leather or of synthetic or woven material, and **in that** a central opening (8) is provided in the lining on the central phosphorescent band of the flexible support (2).

16. Bracelet (1) according to claim 14, **characterized in that** the insert (1') is confined inside a lining made of leather or of synthetic or woven material, and **in that** openings are provided in one part of the edge of the lining on the fluorescent bands of the flexible support (2) in order to display information.
